# FASCICULE DE BREVET EUROPEEN

(11) **EP 3 810 422 B1**
(45) Date de publication et mention de la délivrance du brevet: **09.08.2023**
(21) Numéro de dépôt: 19745687.4
(22) Date de dépôt: 17.06.2019
(51) Int. Cl.: E04H 15/20, B32B 27/12, B32B 27/18, B32B 27/28, B32B 27/36, B32B 27/40, B32B 27/32

(54) **TEXTILE ENDUIT POUR ÉLÉMENT DE PROTECTION EN MILIEU INDUSTRIEL**
BESCHICHTETES GEWEBE FÜR SCHUTZELEMENT IN INDUSTRIELLER UMGEBUNG
COATED FABRIC FOR PROTECTIVE ELEMENT IN INDUSTRIAL ENVIRONMENT

(30) Priorité: 25.06.2018 FR 1855685
(43) Date de publication de la demande: 28.04.2021
(73) Titulaire: Serge Ferrari SAS, 38110 Saint Jean de Soudain (FR)
(72) Inventeur: MERENNA, Guilhem, 8006 ZÜRICH (CH); ROJON, Jonathan, 8192 GLATTFELDEN (CH)
(74) Mandataire: Cabinet Laurent & Charras
(86) Numéro de dépôt international: PCT/FR2019/051474
(87) Numéro de publication internationale: WO 2020/002794

(56) Documents cités:
- WO-A1-2004/109041
- WO-A1-2014/134715
- FR-A1- 2 678 172
- JP-A- 2013 076 694
- US-A1- 2002 187 696
- US-B1- 6 239 046

## Description

### DOMAINE DE L'INVENTION

La présente invention concerne le domaine des textiles enduits pour éléments de protection en milieu industriel et notamment nucléaire. Elle trouve une application par exemple pour la réalisation de structures tridimensionnelles, gonflables notamment, ou comme éléments de protection bidimensionnelles.

### ETAT ANTERIEUR DE LA TECHNIQUE

Les structures gonflables utilisées dans les zones de travail en environnement industriel nucléaire doivent répondre à un cahier des charges strict qui fait référence aux produits et matériaux utilisables en centrale.

Les sites qualifiés d'environnements industriels nucléaires, en particulier les centrales nucléaires sont divisés en trois zones centrées sur le réacteur :
- une première zone, dite zone de réacteur, dans laquelle aucun matériau comprenant du métal ni aucun halogène ne sont autorisés,
- une seconde zone, dite zone de turbine, dans laquelle aucune membrane contenant du chlorure de polyvinyle (PVC) ne sont autorisées,
- une troisième zone, dite zone conventionnelle, dans laquelle les membranes contenant du PVC sont autorisées.

Actuellement, on utilise, dans les première et deuxième zones des membranes à base de polyuréthane thermoplastique (TPU), de silicone et dans la troisième zone des membranes à base de PVC pour réaliser des structures de protection des équipements, parmi lesquelles on peut citer les tentes gonflables.

Pour être utilisée dans une structure de tente gonflable, une membrane doit être réalisée avec des matériaux flexibles et résistants à la pliure et à la déchirure. Bien entendu, dans le domaine d'application spécifique de l'environnement industriel nucléaire, les matériaux doivent également répondre au cahier des charges suivant :
- pouvoir calorifique supérieur (PCS) inférieur à 18MJ/kg,
- poids inférieur à 400g/m²,
- résistance à la déchirure au-delà de 15daN,
- absence d'halogène et de composé métallique.

L'ensemble de ces exigences est très contraignant, ce qui rend les membranes pour une telle application relativement difficiles à obtenir.

On connait des membranes comportant un textile à base de polyester enduit d'un côté par un matériau à base de silicone et de l'autre côté par un matériau à base de PVC telle que celle décrite dans le brevet EP 1 431 447. Cependant ces membranes sont lourdes, peu flexibles et contiennent du chlore. Ces membranes ne peuvent donc pas être utilisées dans un environnement industriel nucléaire. Par ailleurs, ces membranes ne peuvent pas être réparées facilement sur site en cas de dégradation de l'étanchéité. Aussi, il serait avantageux de développer une membrane réparable directement sur place en collant des bandes adhésives d'étanchéité.

Pour pouvoir utiliser ce type de membrane dans un environnement industriel nucléaire il faudrait remplacer la couche d'enduction en PVC par un matériau thermoplastique ne contenant pas d'halogène, et fortement diminuer le poids de l'âme textile. Cette modification se heurterait à de nombreuses difficultés car la diminution du poids de l'âme textile entrainerait une diminution de son épaisseur et augmente donc le risque de contact entre la couche d'enduction à base de silicone et la couche d'enduction située sur la face opposée. Un tel contact doit être proscrit afin d'obtenir les propriétés recherchées.

On connait également des membranes multicouches ne comportant pas de PVC, telles que les membranes pour airbag décrite dans le brevet US 6 239 046 et la demande de brevet US 2002/187696. Ces membranes comportent des couches de polysiloxane et de polyuréthane. Cependant, ces membranes ne peuvent pas être utilisées dans un environnement industriel nucléaire car elles présentent une souplesse et une élasticité trop importantes et ne sont pas imperméables à l'air. En effet, les airbags doivent se gonfler rapidement et présenter une souplesse et une élasticité permettant de former un coussin d'air pour amortir les chocs, mais doivent pouvoir se dégonfler par eux-mêmes après le choc pour pouvoir libérer les occupants du véhicule. Par ailleurs, ces membranes ne contiennent pas de composés ignifugeant. WO 2004/109041 A1 décrit un textile enduit apte à être utilisé en tant que toile dans une structure gonflable de type tente.

### EXPOSE DE L'INVENTION

Il existe donc un besoin de membranes répondant à ce cahier des charges qui soit à la fois souples et étanches à l'air et à l'eau.

En particulier, il existe un besoin de membranes présentant un comportement au feu amélioré, résistant à la décontamination et à l'abrasion et une bonne étanchéité à l'air et à l'eau même dans le cas où la membrane a été pliée. Ces membranes doivent également être flexibles à basse et à haute température et être exemptes d'halogène. Ces propriétés sont requises pour l'utilisation de la membrane dans un environnement industriel nucléaire tel qu'une centrale nucléaire.

Afin de répondre à ce besoin, la Demanderesse a mis au point un textile enduit sur chaque face par un matériau différent ne comportant pas d'halogène.

Ainsi, l'invention concerne un textile enduit, apte à être utilisé notamment en tant que toile dans une structure gonflable, exempt d'halogène, comprenant une âme textile à base de fils synthétiques présentant une première face et une seconde face opposée à ladite première face, ladite première face étant revêtue par une couche d'enduction à base de silicone et ladite seconde face étant revêtue par une couche d'enduction à base d'un polymère thermoplastique lesdites couches d'enduction comprenant chacune au moins un composé ignifugeant identique ou différent en une quantité suffisante pour que le textile enduit présente un pouvoir calorifique supérieur inférieur ou égal à 18 MJ/kg.

Pour réaliser ce type de textile enduit, le Demandeur a remarqué qu'il convenait de prendre des précautions techniques et opératoires pour éviter que le polymère thermoplastique soit au contact des matières siliconées, au risque de voir apparaître un manque d'adhésion des revêtements à l'âme du textile, que celle-ci soit tissée ou non tissée. C'est la raison pour laquelle on a remarqué dans un mode de réalisation privilégié que l'âme du textile doit assurer une étanchéité au passage des matériaux de surface qui sont incompatibles entre eux. Cette étanchéité est obtenue par un tissage suffisamment serré dans le cas d'une âme tissée, ou suffisamment dense dans le cas d'une âme non tissée.

L'invention concerne également une tente gonflable comprenant un textile enduit tel que décrit ci-dessus.

Plus particulièrement, l'invention concerne l'utilisation de ladite tente gonflable dans un environnement industriel nucléaire.

Outre l'absence d'halogène, le textile enduit selon l'invention présente plusieurs avantages comme la souplesse, le caractère ignifuge, le faible poids et la possibilité d'être réparé directement sur le site d'exploitation en cas de perte d'étanchéité, par la possibilité de coller une bande d'étanchéité sur la couche à base de polymère thermoplastique, par l'intermédiaire d'une colle usuelle comme par exemple les adhésifs sensibles à la pression.

Le textile enduit selon l'invention est apte à être utilisé en tant que toile dans une structure gonflable. En d'autres termes, le textile enduit selon l'invention présente une souplesse suffisante pour être déformé par gonflage, mais présente une résistance mécanique suffisante pour ne pas se déchirer.

Ainsi, la Demanderesse a mis au point un textile enduit ne comportant pas d'halogène permettant son utilisation en milieu industriel nucléaire dans les trois zones, que ce soit la zone de réacteur, la zone de turbine ou la zone conventionnelle.

Conformément à l'invention, le textile enduit comprend une âme textile à base de fils synthétiques. L'âme textile peut être un tissu ou un non tissé.

De manière avantageuse, les fils synthétiques ont un titre compris entre 120 dtex et 1500 dtex, préférentiellement entre 200 dtex et 1100 dtex, très préférentiellement entre 280 dtex et 550 dtex. Ceci est avantageux car on obtient une âme présentant un bon compromis entre flexibilité, poids et résistance mécanique.

Avantageusement, les fils synthétiques sont choisis dans le groupe comprenant les fils de polyester et les fils de polyamide, seuls ou en mélange. Plus avantageusement, les fils synthétiques sont des fils de polyester.

Afin de garantir l'étanchéité et en particulier éviter tout contact entre la couche d'enduction à base de silicone et la couche d'enduction à base de polymère thermoplastique, il est avantageux, dans le cas où l'âme est tissée, que l'âme textile comprenne entre 5 et 40 fils de chaine par cm et 5 et 40 fils de trame par cm avec une porosité inférieure à 200 L/m²/s selon la norme DIN 53887. Dans le cas où l'âme est non tissée, il est avantageux que la porosité soit inférieure à 200 L/m²/s selon la norme DIN 53887.

La première face de l'âme textile est revêtue par une couche d'enduction à base de silicone. La couche d'enduction peut être à base de nombreux types de silicone. De manière avantageuse, la silicone est choisie dans le groupe comprenant le polydiméthylsiloxane, le polydiphénylsiloxane, l'oligosiloxane, le polyaminosiloxane et le polyvinylsiloxane.

L'épaisseur, tout comme le poids de ladite couche d'enduction influent sur les propriétés du textile enduit. Il est préférable de trouver un compromis entre étanchéité et souplesse.

Ainsi, de manière avantageuse, la couche d'enduction à base de silicone a un poids compris entre 40 g/m² et 200 g/m².

Egalement de manière avantageuse, la couche d'enduction à base de silicone présente une épaisseur comprise entre 0,02 mm et 0,2 mm.

Pour les mêmes raisons, la couche d'enduction à base d'un polymère thermoplastique a un poids compris entre 40 g/m² et 200 g/m².

Egalement de manière avantageuse, la couche d'enduction à base d'un polymère thermoplastique présente une épaisseur comprise entre 0,02 mm et 0,2 mm.

La seconde face de l'âme textile est revêtue par une couche d'enduction à base d'un polymère thermoplastique. La couche d'enduction peut être à base de nombreux types de polymère thermoplastique à condition qu'ils ne contiennent pas d'halogène.

De manière avantageuse, le polymère thermoplastique est choisi dans le groupe comprenant les polyuréthanes, les polyoléfines et les polyacrylates. Dans la suite de la description, l'invention a été décrite dans la forme préférée où le polymère thermoplastique et à base de polyuréthane.

En pratique, la couche d'enduction à base de polymère thermoplastique peut être obtenue à partir d'une dispersion ou d'une émulsion, ou bien encore d'un film déposé sur l'âme textile.

La propriété ignifugeante est apportée par un composé ignifugeant intégré aux couches d'enduction. L'efficacité d'un composé ignifugeant dépend de son environnement, de sa nature et de sa quantité.

Le textile enduit selon l'invention présente un pouvoir calorifique supérieur (PCS) inférieur ou égal à 18 MJ/kg. De préférence, le textile enduit présente un PCS inférieur ou égal à 15MJ/kg, plus préférentiellement un PCS inférieur ou égal à 12 MJ/kg.

La nature du composé ignifugeant choisi influe sur la quantité suffisante pour que le textile présente un tel PCS.

Le PCS est mesurée selon la norme ISO 5660 avec la méthode dite « au cône ».

L'homme du métier est donc capable de déterminer, sans effort particulier, le PCS d'un textile. Ainsi, l'homme du métier peut adapter la quantité de composé ignifugeant à intégrer dans chaque couche d'enduction.

De manière avantageuse, ledit composé ignifugeant est choisi dans le groupe comprenant le trihydrate d'alumine, le carbonate de calcium, l'ammonium polyphosphate, l'hydroxyde de magnésium, la silice, les zéolites, l'hydroxystannate de zinc et l'hydroxystannate de calcium, pris seul ou en mélange.

Le composé ignifugeant peut être le même dans chacune des couches d'enductions. Cependant la couche d'enduction à base de silicone présente un environnement différent de la couche d'enduction à base d'un polymère thermoplastique. Ainsi, il peut être avantageux que les couches d'enduction comprennent des composés ignifugeant différents.

Ainsi, de manière avantageuse, la couche d'enduction à base de silicone comporte au moins un composé ignifugeant choisi dans le groupe comprenant le trihydrate d'alumine et le carbonate de calcium alors que la couche d'enduction à base d'un polymère thermoplastique comporte avantageusement au moins un composé ignifugeant choisi dans le groupe comprenant le trihydrate d'alumine et l'ammonium polyphosphate.

Il est possible, par ailleurs, que la quantité de composé ignifugeant soit différente d'une couche d'enduction à l'autre, même dans le cas où le composé dans chacune des couches est identique. En effet, selon les conditions d'utilisations, il se peut qu'une des faces du textile enduit soit plus exposée aux risques d'inflammation que l'autre face. Dans ces conditions, il peut être avantageux de rendre la face la plus exposée plus ignifuge avec un PCS propre plus faible.

Ainsi, dans un mode de réalisation, la quantité de composé ignifugeant dans la couche d'enduction à base de silicone est différente de la quantité de composé ignifugeant dans la couche d'enduction à base d'un polymère thermoplastique.

De manière avantageuse, dans ce mode de réalisation, ladite couche d'enduction à base de silicone comprend entre 2 % et 70 % en poids d'au moins un composé ignifugeant, de manière plus avantageuse entre 10 % et 60 %, et de manière encore plus avantageuse entre 30 % et 55 %.

De manière avantageuse, dans ce mode de réalisation, ladite couche d'enduction à base de polymère thermoplastique, de préférence à base de polyuréthane comprend entre 5 % et 90 % en poids d'au moins un composé ignifugeant, de manière plus avantageuse entre 15 % et 80 %, et de manière encore plus avantageuse entre 50 % et 80 %.

### DESCRIPTION SOMMAIRE DES FIGURES

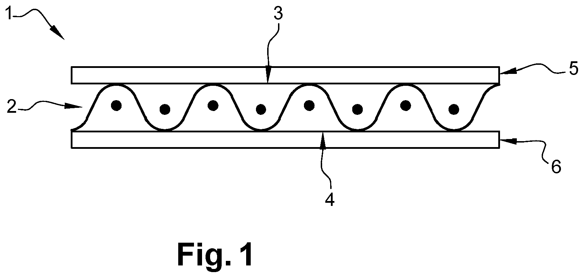

La manière de réaliser l'invention, ainsi que les avantages qui en découlent, ressortiront bien de la description du mode de réalisation qui suit, à l'appui de la figure 1 annexée qui est une coupe transversale d'un textile enduit selon un mode de réalisation de l'invention.

Bien entendu, les dimensions et les proportions des éléments illustrés à la figure 1 ont pu être exagérées par rapport à la réalité, et n'ont été données que dans le but de faciliter la compréhension de l'invention.

### DESCRIPTION DETAILLEE

La figure 1 représente un mode de réalisation particulier d'un textile 1 comprenant une âme textile tissé 2 présentant une première face 3 et une seconde face 4 opposée.

Dans le cas d'une tente gonflable comprenant le textile enduit décrit ci-dessus, la face revêtue par une couche d'enduction à base de silicone est avantageusement tournée vers l'extérieur et la face revêtue par une couche d'enduction à base d'un polymère thermoplastique est avantageusement tournée vers l'intérieur.

Ceci est avantageux car le textile peut être réparé directement par l'utilisateur qui se trouve à l'intérieur de la tente par le collage d'une bande adhésive étanche.

La première face 3 est revêtue d'une couche d'enduction 5 à base de silicone. Comme déjà évoqué, cette couche d'enduction 5 comprend au moins un composé ignifugeant de sorte à conférer au textile 1 un caractère ignifuge.

La seconde face 4 est revêtue d'une couche d'enduction 6 à base de polyuréthane. Comme mentionné précédemment, cette couche d'enduction 6 comprend au moins un composé ignifugeant de sorte à conférer au textile 1 un caractère ignifuge.

### Exemples

Plusieurs échantillons ont été réalisée à partir d'un textile tissé selon une armature de type toile à base de fils de polyester de 280 dtex en chaine et 550 dtex en trame, de 120g/m², présentant 17 fils par cm en chaine et 12 fils par cm en trame.

### Echantillon A : textile enduit Si/PU (invention)

On enduit ce textile sur une première face avec une couche d'enduction à base de polydiméthylsiloxane comprenant 43 % en poids de carbonate de calcium.

La seconde face a ensuite été enduite avec une dispersion aqueuse à base de polyuréthane polycarbonate, polyester aliphatique comprenant 22 % en poids de polyphosphate d'ammonium et 56% en poids de trihydrate d'alumine, le pourcentage en poids s'entendant par rapport à la masse sèche.

### Echantillon B : textile enduit Si/Si (contre-exemple)

On enduit le même textile sur les deux faces avec une couche d'enduction à base de polydiméthylsiloxane comprenant 43 % en poids de carbonate de calcium.

### Echantillon C : textile enduit PU/PU (contre-exemple)

On enduit le même textile sur les deux faces avec une dispersion aqueuse à base de polyuréthane polycarbonate, polyester aliphatique 22 % en poids de polyphosphate d'ammonium et comprenant 56 % en poids de trihydrate, le pourcentage en poids s'entendant par rapport à la masse sèche.

### Détermination de la résistance au feu des échantillons A, B et C

Le PCS est mesurée selon la norme ISO 5660 avec la méthode dite « au cône ».

Les résultats sont résumés dans le tableau 1.

**Tableau 1**

| Echantillon | PCS (MJ/kg) | Feu (M2) NFP 92507 |
|---|---|---|
| A | 10,4 | OK |
| B | 11,4 | OK |
| C | 8,1 | OK |

Comme déjà évoqué, pour répondre au cahier des charges, un textile doit présenter un PCS inférieur à 18 MJ/kg. Ainsi, les trois échantillons A, B et C répondent aux exigences de résistances au feu.

### Détermination de la résistance à la déchirure des échantillons A, B et C et de leur souplesse

La résistance à la déchirure a été mesurée selon la norme DIN 53 363. La souplesse Taber a été mesurée selon la norme D5342-D6650

Les résultats sont résumés dans le tableau 2.

**Tableau 2**

| Echantillon | Déchirure chaine/trame (N) | Souplesse Taber |
|---|---|---|
| A | 206/211 | 1,9 |
| B | 337/175 | 1,1 |
| C | 317/216 | 4,2 |

Comme déjà évoqué, pour répondre au cahier des charges, un textile est suffisamment résistant à la déchirure s'il résiste à une charge de 15 daN (150 N). Le textile doit par ailleurs être suffisamment souple, ce qui est le cas si la souplesse Taber est inférieure à 2. Ainsi, l'échantillon A et l'échantillon B présentent une résistance à la déchirure et une souplesse leur permettant d'être utilisés dans un environnement industriel nucléaire, en particulier comme toile de tente gonflable. En revanche l'échantillon C n'est pas assez souple pour une telle utilisation.

### Détermination de l'étanchéité à l'eau avant et après pliage des échantillons A, B et C

L'étanchéité à l'eau a été mesurée selon la norme EN 20811.

Les résultats sont résumés dans le tableau 3.

**Tableau 3**

| Echantillon | Etanchéité Colonne d'eau (cm) | Etanchéité colonne d'eau après pliage (cm) première face/seconde face |
|---|---|---|
| A | >500 | >500/331 |
| B | >500 | >500/>500 |
| C | >500 | 31/37 |

Un textile est suffisamment étanche si le résultat du test de la colonne d'eau est supérieur à 100 cm. Ainsi, avant pliage, les échantillons A, B et C sont tous suffisamment étanches. En revanche, après pliage, l'échantillon C n'est pas assez étanche.

### Test de collage d'une bande adhésive étanche sur les textiles enduits des exemples 1 à 3

Le test d'adhésion a été réalisé selon la norme ISO 4587

Les résultats sont résumés dans le tableau 4.

**Tableau 4**

| Echantillon | Test d'adhésion cisaillement |
|---|---|
| A | >500g |
| B | <20g |
| C | >500g |

Une bande adhésive d'étanchéité, a été collée sur la seconde face (échantillon A et C PU, échantillon B Si) des échantillons A, B et C à l'aide d'une colle fusible vendu avec la bande adhésive dans le « Repair Kit Caperlan^{®} » commercialisé par la société DECATHLON.

La bande collée sur la seconde face de l'échantillon B ne se colle pas de manière satisfaisante et la réparation de ce textile n'est pas possible directement sur site. En revanche, on a pu coller de manière satisfaisante une bande adhésive d'étanchéité sur la seconde face des échantillons AetC.

### Conclusion

Seul l'échantillon A répond à l'ensemble des exigences pour être utilisé dans un environnement industriel nucléaire et peut être réparé directement sur le site d'utilisation en cas de perte d'étanchéité.

## Revendications

1. Textile enduit (1), apte à être utilisé notamment en tant que toile dans une structure gonflable, exempt d'halogène, comprenant une âme textile (2) à base de fils synthétiques, présentant une première face (3) et une seconde face (4) opposée à ladite première face, ladite première face étant revêtue par une couche d'enduction (5) à base de silicone et ladite seconde face étant revêtue par une couche d'enduction (6) à base d'un polymère thermoplastique, lesdites couches d'enduction (5,6) comprenant chacune au moins un composé ignifugeant identique ou différent, en une quantité suffisante pour que le textile enduit présente un pouvoir calorifique supérieur inférieur ou égal à 18 MJ/kg.

2. Textile enduit (1) selon la revendication 1, **caractérisé en ce que** les fils synthétiques ont un titre compris entre 120 dtex et 1500 dtex.

3. Textile enduit (1) selon l'une des revendications précédentes, **caractérisé en ce que** les fils synthétiques sont des fils de polyester.

4. Textile enduit (1) selon l'une des revendications précédentes, **caractérisé en ce que** la silicone est choisie dans le groupe comprenant le polydiméthylsiloxane, le polydiphénylsiloxane, l'oligosiloxane, le polyaminosiloxane et le polyvinylsiloxane.

5. Textile enduit (1) selon l'une des revendications précédentes, **caractérisé en ce que** le polymère thermoplastique est choisi dans le groupe comprenant les polyuréthanes, les polyoléfines et les polyacrylates.

6. Textile enduit (1) selon l'une des revendications précédentes, **caractérisé en ce que** ladite couche (5) d'enduction à base de silicone présente un poids compris entre 40 g/m² et 200 g/m².

7. Textile enduit (1) selon l'une des revendications précédentes, **caractérisé en ce que** ladite couche d'enduction (6) à base d'un polymère thermoplastique présente un poids compris entre 40 g/m² et 200 g/m².

8. Textile enduit (1) selon l'une des revendications précédentes, **caractérisé en ce que** ledit composé ignifugeant est choisi dans le groupe comprenant le trihydrate d'alumine, le carbonate de calcium, l'ammonium polyphosphate, l'hydroxyde de magnésium, la silice, les zéolites, l'hydroxystannate de zinc et l'hydroxystannate de calcium, pris seul ou en mélange.

9. Textile enduit (1) selon l'une des revendications précédentes, **caractérisé en ce que** ladite couche d'enduction (5) à base de silicone comprend entre 2 % et 70 % en poids d'au moins un composé ignifugeant.

10. Textile enduit (1) selon l'une des revendications précédentes, **caractérisé en ce que** ladite couche d'enduction (6) à base d'un polymère thermoplastique comprend entre 5 % et 90 % en poids d'au moins un composé ignifugeant.

11. Tente gonflable comprenant un textile enduit (1) selon l'une des revendications 1 à 10.

12. Utilisation de la tente gonflable selon la revendication 11 dans un environnement industriel nucléaire.

## Patentansprüche

1. Beschichtetes Gewebe (1), zum Einsatz als Stoffbahn in einer aufblasbaren Konstruktion, halogenfrei, mit einem textilen Kern (2) auf Basis synthetischer Garne, mit einer ersten Seite (3) und einer zweiten Seite (4) gegenüber der ersten Seite, diese erste Seite ist beschichtet mit einer Beschichtung auf Silikonbasis (5), die zweite Seite ist beschichtet mit einer Beschichtung auf Basis eines thermoplastischen Polymers (6), wobei diese Beschichtungen (5, 6) jeweils mindestens eine identische oder unterschiedliche flammhemmende Verbindung in einer Menge umfassen die ausreicht, dass das beschichtete Textil einen Brennwert von 18 MJ/kg oder weniger aufweist.

2. Beschichtetes Gewebe (1) nach Anspruch 1, **dadurch gekennzeichnet, dass** die synthetischen Garne einen Titer zwischen 120 dtex und 1500 dtex aufweisen.

3. Beschichtetes Gewebe (1) nach einem der vorangehenden Ansprüche, **dadurch gekennzeichnet, dass** es sich bei den synthetischen Garnen um Polyestergarne handelt.

4. Beschichtetes Gewebe (1) nach einem der vorangehenden Ansprüche, **dadurch gekennzeichnet, dass** das Silikon ausgewählt wird aus der Gruppe zu der Polydimethylsiloxan, Polydiphenylsiloxan, Oligosiloxan, Polyaminosiloxan und Polyvinylsiloxan gehören.

5. Beschichtetes Gewebe (1) nach einem der vorangehenden Ansprüche, **dadurch gekennzeichnet, dass** das thermoplastische Polymer ausgewählt wird aus der Gruppe zu der die Polyurethane, die Polyolefine und die Polyacrylate gehören.

6. Beschichtetes Gewebe (1) nach einem der vorangehenden Ansprüche, **dadurch gekennzeichnet, dass** die erwähnte Beschichtung (5) auf Silikonbasis ein Gewicht zwischen 40 g/m² und 200 g/m² aufweist.

7. Beschichtetes Gewebe (1) nach einem der vorangehenden Ansprüche, **dadurch gekennzeichnet, dass** die erwähnte Beschichtung (6) auf Basis eines thermoplastischen Polymers ein Gewicht zwischen 40 g/m² und 200 g/m² aufweist.

8. Beschichtetes Gewebe (1) nach einem der vorangehenden Ansprüche, **dadurch gekennzeichnet, dass** die erwähnte flammhemmende Verbindung ausgewählt wird aus der Gruppe zu der Alumintrihydrat, Kalziumkarbonat, Ammoniumpolyphosphat, Magnesiumhydroxyd, Kieselerde, die Zeolite, Zink-Hydroxystannat und Kalzium- Hydroxystannat, alleine oder in Mischung, gehören.

9. Beschichtetes Gewebe (1) nach einem der vorangehenden Ansprüche, **dadurch gekennzeichnet, dass** die erwähnte Beschichtung (5) auf Silikonbasis zwischen mindestens 2 und 70 Gewichts-% einer flammhemmenden Verbindung enthält.

10. Beschichtetes Gewebe (1) nach einem der vorangehenden Ansprüche, **dadurch gekennzeichnet, dass** die erwähnte Beschichtung (6) auf Basis eines thermoplastischen Polymers zwischen mindestens 5 und 90 Gewichts-% einer flammhemmenden Verbindung enthält.

11. Aufblasbares Zelt, das ein beschichtetes Gewebe (1) nach einem der vorangehenden Ansprüche 1 bis 10 enthält.

12. Einsatz des aufblasbaren Zeltes nach Anspruch 11 in einer kerntechnischen Umgebung.

## Claims

1. A coated textile (1) which is capable of being used in particular as a cloth in an inflatable structure, which is free from halogens, comprising a textile core (2) based on synthetic filaments, having a first face (3) and a second face (4) opposite to said first face, said first face being coated with a coating layer (5) based on silicone and said second face being coated with a coating layer (6) based on a thermoplastic polymer, said coating layers (5, 6) each comprising at least one flame retardant compound, which may be identical or different, in a quantity which is sufficient for the coated textile to have a gross calorific value which is greater than or equal to 18 MJ/kg.

2. The coated textile (1) as claimed in claim 1, **characterized in that** the synthetic filaments have a titer in the range 120 dtex to 1500 dtex.

3. The coated textile (1) as claimed in one of the preceding claims, **characterized in that** the synthetic filaments are polyester filaments.

4. The coated textile (1) as claimed in one of the preceding claims, **characterized in that** the silicone is selected from the group comprising polydimethylsiloxane, polydiphenylsiloxane, oligosiloxane, polyaminosiloxane and polyvinylsiloxane.

5. The coated textile (1) as claimed in one of the preceding claims, **characterized in that** the thermoplastic polymer is selected from the group comprising polyurethanes, polyolefins and polyacrylates.

6. The coated textile (1) as claimed in one of the preceding claims, **characterized in that** said coating layer (5) based on silicone has a weight which is in the range 40 g/m² to 200 g/m².

7. The coated textile (1) as claimed in one of the preceding claims, **characterized in that** the weight of said coating layer (6) based on a thermoplastic polymer is in the range 40 g/m² to 200 g/m².

8. The coated textile (1) as claimed in one of the preceding claims, **characterized in that** said flame retardant compound is selected from the group comprising alumina trihydrate, calcium carbonate, ammonium polyphosphate, magnesium hydroxide, silica, zeolites, zinc hydroxystannate and calcium hydroxystannate, used alone or as a mixture.

9. The coated textile (1) as claimed in one of the preceding claims, **characterized in that** said coating layer (5) based on silicone comprises in the range 2% to 70% by weight of at least one flame retardant compound.

10. The coated textile (1) as claimed in one of the preceding claims, **characterized in that** said coating layer (6) based on thermoplastic polymer comprises in the range 5% to 90% by weight of at least one flame retardant compound.

11. An inflatable tent comprising a coated textile (1) as claimed in one of claims 1 to 10.

12. Use of the inflatable tent as claimed in claim 11 in a nuclear industrial environment.
